# EUROPEAN PATENT SPECIFICATION

(11) **EP 2 860 072 B1**
(45) Date of publication and mention of the grant of the patent: **23.11.2016**
(21) Application number: 13800855.2
(22) Date of filing: 06.06.2013
(51) Int. Cl.: B60T 1/087, F16D 65/78, F16D 57/06, B60T 10/02

(54) **BRAKING DEVICE**
BREMSVORRICHTUNG
DISPOSITIF DE FREINAGE

(30) Priority: 06.06.2012 ES 201230876
(43) Date of publication of application: 15.04.2015
(73) Proprietor: Gómez De Sebastián, Fernando, 47130 Simancas (Valladolid) (ES); Beneitez Redondo, María, 47130 Simancas (Valladolid) (ES); Gómez Beneitez, José María, 47130 Simancas (Valladolid) (ES); Gómez Beneitez, Isabel, 47130 Simancas (Valladolid) (ES)
(72) Inventor: GÓMEZ DE SEBASTIÁN, Fernando, 47130 Simancas (Valladolid) (ES); GÓMEZ BENEITEZ, José María, 47130 Simancas (Valladolid) (ES)
(74) Representative: Ungria López, Javier
(86) International application number: PCT/ES2013/070365
(87) International publication number: WO 2013/182726

(56) References cited:
- EP-A2- 0 251 073
- WO-A1-03/002884
- CH-A5- 584 614
- DE-A1- 1 809 442
- DE-A1- 3 928 230
- DE-B- 1 090 117
- FR-A1- 2 579 706
- GB-A- 1 211 629
- GB-A- 1 349 013

## Description

### Object of the invention

The present invention relates to a universal braking device, which maintains thermal stability and in which the moving parts that are subjected to wear are reduced, thus meaning that they do not pollute the environment. It has industrial applicability, especially in the automotive industry.

### Technical problem to be solved and background to the invention

Different braking systems for vehicles are known in the state of the art, wherein mechanical or hydraulic systems, which exert pressure on an element that carries out braking on the wheels of the vehicle, are involved.

In a vehicle it is essential to be able to stop the same in safe conditions. It is for this reason that vehicles have more or less complex braking systems.

Among braking systems there is the drum braking system in which brake pads situated inside a drum, which is integral to a wheel, press against the drum in such a way that the wheel is stopped due to the friction between the brake pads and the drum. The problem with this system is the dissipation of the heat generated inside the drum due to the friction and the sudden blocking of the wheel.

Among braking systems there is also the disc brake in which the pressure applied by the vehicle driver on a brake pedal is transmitted to pads via a hydraulic system, which press against a disc that is integral to the wheel of the vehicle, in such a way that the aforementioned wheel is stopped due to the friction of the pads against the disc.

In both systems, the heat generated by the action of the brake has a considerable impact on the braking regularity and efficiency, all the more so the more is required of it.

The braking systems currently used have several problems:
- the parts that form these devices are subjected to wear due to the use thereof, causing loss in performance and forcing said parts to be changed from time to time, which implies maintenance time;
- the conditioning of braking effectiveness and power lies in its excessively large size and the use of more resistant materials; this, as well as maintenance, constitutes an additional cost for the user;

- the braking elements are vehicle-specific, it being necessary to have a range of elements that make up said braking systems that are adapted to each vehicle,
- moreover, the brake discs and pads produce a toxic dust when they wear down that pollutes the environment with a non-degradable element.

What is sought is a braking device that is efficient in any demanding condition, is universal and requires less maintenance than those that are known, as well as being cheaper and cleaner, i.e., they do not release polluting particles into the environment that endanger people's health.

The present invention relates to a device that brakes a shaft subjected to rotation through the action of a force external to the same, and in which the only element that generates braking force is the interruption of the flow of a fluid that interacts with the rotating element, which is what generates the flow of the fluid and is integral to the rotation shaft, the friction system being substituted for one that is based on the compression of a fluid, the mechanical elements that intervene in the braking through friction thus being removed and, as a result, the wear thereof. The present invention also includes two options for dissipating the heat generated due to the braking action, such as: through heat dissipation due to the action of a turbofan joined to the elements subjected to rotation, or a cooling system based on the recirculation of a cooling liquid, which guarantee the thermal stability of the system. It is applicable to several fields, especially to the automotive industry.

As previously mentioned, the device object of the invention is a universal device that may be applied to a wide range of cars, with the same size, since the device covers the braking needs of a large number of cars with this unique size.

The document DE 3 802 665 A1 is known in the state of the art, which discloses a closed, oil-filled metal housing comprising opposite hydraulic cylinders and provided with cooling fins, said housing being fixed to the chassis of the vehicle.

It is also known document EP 0 251 073 A2 which discloses a wheel brake for braking preferably non-driven wheels on surface vehicles, air and space craft. The wheel brake consists of a hydraulic circuit in which the rotating wheel drives a displacement pump which delivers a fluid, preferably distilled water, via a throttle-type valve into a storage tank and from this back to the pump. The brake pressure can be adjusted by way of the throttle-type valve, which is preferably controlled by an anti-lock device. The storage tank is fitted with a pressure relief valve which opens at various adjustable pressures, preferably bar in the case of water.

Finally document DE 1 809 442 A1 is also known, said document discloses a braking device which can be actuated, for example, prior to actuation of the friction brakes, so that the heat generated by the friction brakes is reduced, the braking device is coupled to a wheel of a vehicle by means of a rotatable shaft for driving a pump wherein the transference from the shaft to the pump is variable.

### Description of the invention

The present invention relates to a system for obtaining the braking of a shaft subjected to rotation, such as the wheel of a vehicle, by applying pressure to a hydraulic system on a mechanical element, which generates pressure in the movement thereof on a fluid that directly produces braking by interacting with the driving element of the same.

The braking device, object of the invention, comprises the features defined in claim 1. transmission shaft.

The stop valve in the braking device, object of the invention, may be a piston or a tap.

The braking device comprises at least one drive gear and at least one idler gear situated in a driver gear chamber and an idler gear chamber, these chambers being situated in the volumetric pump.

The volumetric pump of the braking device comprises at least one first chamber situated such that it corresponds to the at least one first cylinder and at least one second chamber situated such that it corresponds to the at least one second cylinder.

In the braking device the drive gear chamber, the idler gear chamber, the first chamber and the second chamber are all connected to each other.

In the braking device, object of the invention, the second clamping disc, along with the inner housing, make up the brake fluid recirculation chamber.

In the braking device, object of the invention, the first disc and the second disc comprise a plurality of through holes, which are situated such that they correspond to the at least one first cylinder and to the at least one second cylinder.

In the braking device, object of the invention, the recirculation chamber closes in a fluid-tight manner via a first friction bearing situated in the inner housing, a second friction bearing installed in the second disc, a number of O-ring seals situated between the first disc and the inner housing and between the second disc and the outer housing, and a number of compression segments installed in the piston.

In the braking device, object of the invention, the piston, which is housed in a guide cylinder, moves towards the second clamping disc via the pressure increase of the piston actuating fluid contained in the fluid receiving chamber for actuating the piston situated in the inner housing that is connected to the guide cylinder; and the piston moves backwards towards the inside of the guide cylinder due to the effect of a spring, which rests on the second clamping disc, wherein the at least one first cylinder and the at least one second cylinder are situated on one side and on a stop ridge situated inside the piston. So when the piston actuating fluid contained in the fluid receiving chamber for actuating the piston stops putting pressure on the piston, the aforementioned piston moves backwards through the inside of the cylinder until it abuts with a support ridge.

In the braking device, object of the invention, the piston comprises a number of compression segments.

In the braking device, object of the invention, the housings comprise a first inner recess in which an axial bearing is installed such that the transmission shaft rests on the axial bearing for it to pass through the housings.

In the braking device, object of the invention, the housings comprise a second inner recess in which a friction bearing is installed, which makes the device fluid-tight.

In the braking device, object of the invention, the first disc and the second disc comprise a number of friction bearings coaxial to the transmission shaft, which guarantee that the perimeter chamber is fluid-tight.

The housings of the brake device, object of the invention, comprise a number of fins on the outer portion thereof to dissipate the heat generated by the brake fluid that moves through the recirculation chamber.

The brake device, object of the invention, comprises a number of vanes situated around the transmission shaft that generate forced convection, which helps dissipate the heat absorbed by the fins generated by the brake fluid that moves through the recirculation chamber.

### Description of the figures

To complete the description, and for the purpose of helping to make the characteristics of the invention more readily understandable, the present specification is accompanied by a set of figures constituting an integral part of the same, which by way of illustration and not limitation represent the following:
Figure 1 shows a side view of an exemplary embodiment of the braking device.
Figure 2 is a sectional view of the exemplary embodiment in figure 1.
Figure 3 shows a perspective view of the exemplary embodiment shown in figure 1 in which elements have been removed so as to see the inside of the device.

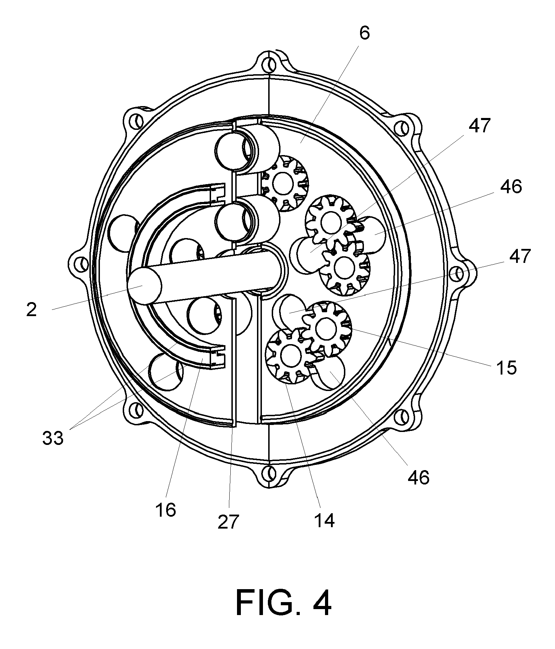

Figure 4 shows a perspective view of the exemplary embodiment shown in figure 1, seen from the outer portion of the device, in which elements have been removed so as to see the inside of the device.

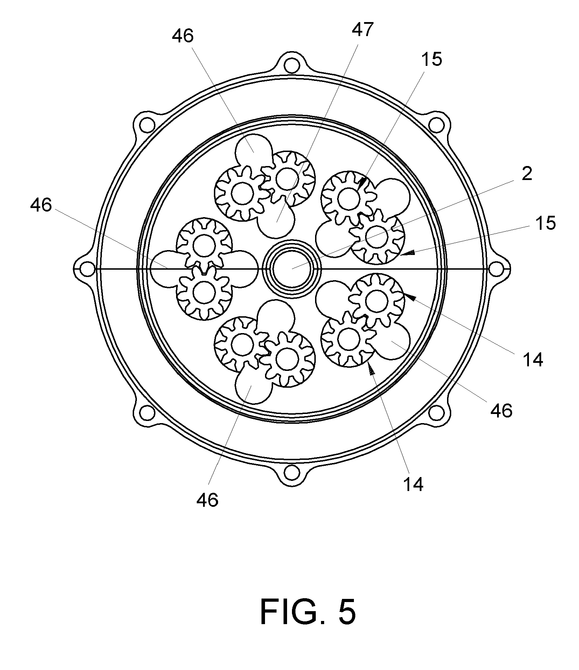

Figure 5 is a frontal view of the inner portion of the device in which elements have been removed so as to see the components of the device more clearly.

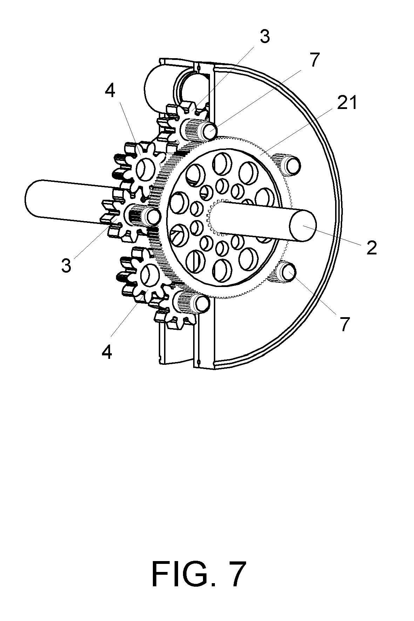

Figure 6 and 7 are sectional perspective views of the outer portion of the device in which elements have been removed so as to see the components of the device more clearly.
Figure 8 shows a perspective view of the piston of the braking device.
Figure 9 shows an exploded view of the piston of the braking device in which other components that act along with the piston are reflected.
Figure 10 is a detailed sectional view of the placement of the components in figure 7 when they are mounted in the device, object of the invention.
Figure 11 is a detailed view of the high compression segments installed in the piston, which may be seen in figure 7.

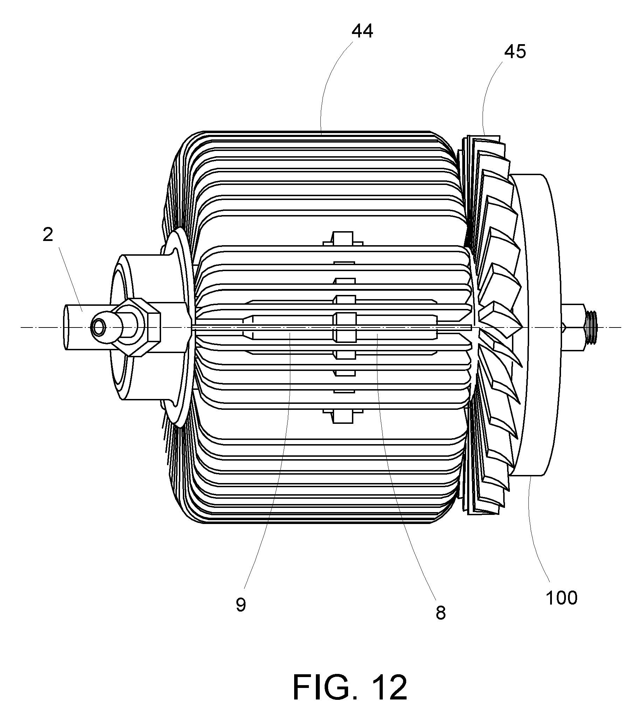

Figure 12 is a perspective view of the braking device, object of the invention, in which air cooling is carried out.

A list of numbered references that have been used in the figures shown is provided below:
1.- device,
2.- transmission shaft,
3.- drive gear,
4.- idler gear,
6.- volumetric pump,
7.- spline shaft,
8.- outer housing,
9.- inner housing,
10.- screw,
11.- chamber,
12.- second cylinder,
13.- recirculation chamber,
14.- drive gear chamber,
15.- idler gear chamber,
16.- piston,
17.- inner high compression rings,
18.- guide cylinder,
19.- actuating fluid receiving chamber,
20.- threaded drill holes,
21.- cogwheel,
22.- O-ring seal between housings,
23.- step,
24.- spring,
25.- axial bearing,
26.- first disc,
27.- second disc,
28.- plurality of through holes,
29.- outer high compression rings,
29a.- tabs,
29b.- opening,
30.- friction bearing,
31.- support ridge,
32a.- first inner collar,
32b.- second inner collar,
33.- casing,
34.- first cylinder,
35.- first step,
36.- second step,
37.- outer collar,
38a, 38b.- first inner recess,
39a, 39b.- second inner recess,
40.- stop ridge,
41.- outer grooves,
42.- inner grooves,
43.- perimeter chamber,
44.- fins,
45.- vanes,
46.- first chamber,
47.- second chamber,
100.- disc,
101.- central drill hole.

### Description of an embodiment of the invention

A description of a preferred exemplary embodiment of the invention, which refers to the references of the figures, is presented below.

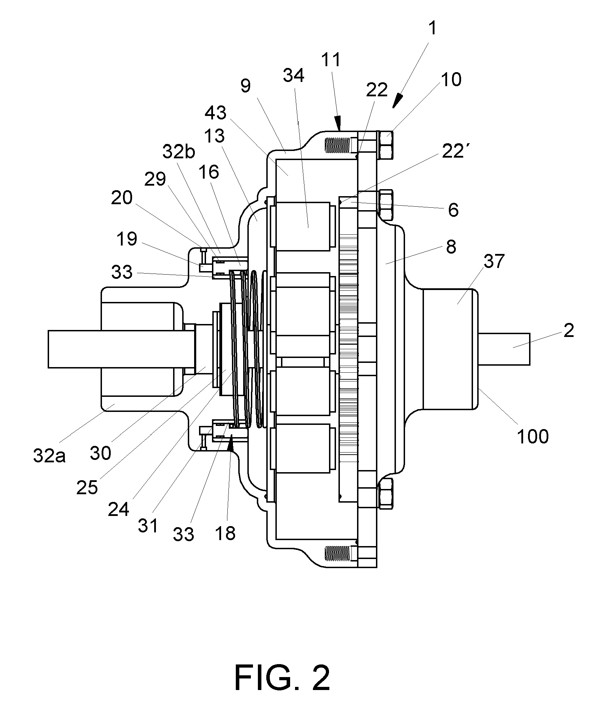

As mentioned above, figure 2 is a sectional view of an exemplary embodiment of the braking device (1), object of the invention.

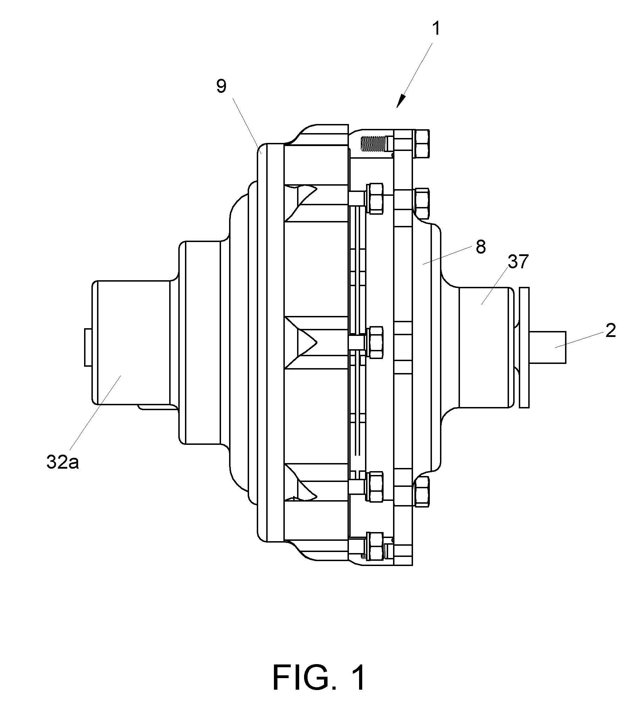

With regard to this description, an inner area, which is the left area according to figure 1, and an outer area that is the right area in figure 1 shall be considered. With the device installed on a transmission shaft (2), the outer portion is visible (right in figure 1) and the inner portion is hidden (left in figure 1).

In this exemplary embodiment of the braking device (1), object of the invention, the elements that make up the braking device (1) are installed coaxially to a transmission shaft (2).

The braking device (1) comprises a transmission shaft (2) on which the rest of the components of the aforementioned device (1) are situated, it being this transmission shaft (2) that receives the rotational movement that is external to the device (1), thus transferring this movement to the braking device (1).

A disc (100) is installed on the outer end of the transmission shaft (2). The disc (100) has a central drill hole (101) that fits on the transmission shaft (2).

The disc (100) is fixed to the transmission shaft (2) via a nut (not shown in the figures) or via a central grooved drill hole (101) to transmit rotation.

The device (1) comprises a driving element, which receives the rotational movement from the transmission shaft (2); said driving element drives a brake fluid as explained below in this specification.

The driving element of the invention in the preferred embodiment is a volumetric pump (6), in another exemplary embodiment it is at least one piston, and there two alternative embodiments in which the driving element is a helicoid and in another it is a helix.

The preferred embodiment of the invention may be seen in figure 1, in which the driving element is pairs of gears of a volumetric pump. An outer housing (8) and an inner housing (9) are installed around the transmission shaft (2) and coaxially with said transmission shaft (2) in the device (1). These housings (8, 9) are joined via screws (10) arranged in the perimeter of the two housings (8, 9), thus forming the chamber (11). This chamber (11) formed by the joining of the housings (8, 9) also forms the outer structure of the braking device (1).

In the preferred embodiment of the invention, the body of a volumetric pump (6) is fixed to the outer housing (8), inside which there are five gear pairs (this number is not limiting given that there may be more or less), which comprise a drive gear (3) that actuates an idler gear (4).

In the joint between the outer housing (8) and the body of the pump (6), and between the first disc (26) and the body of the pump (6) there are a number of O-ring seals (22'), which guarantee that the different chambers into which the device (1) is divided are fluid-tight.

The drive gear (3) is housed in a drive gear chamber (14) and the idler gear (4) is housed in an idler gear chamber (15), the two chambers (14, 15) being situated inside the body of the volumetric pump (6).

Each drive gear (3) comprises a spline shaft (7), which projects from the aforementioned drive gear (3) towards the inside of the outer housing (8), and is connected to the transmission shaft (2) via a cogwheel (21) that is coaxial and is joined to the aforementioned transmission shaft (2). Thus, the spline shaft (7) of each drive gear (3) is in contact with the cogwheel (21) inside the outer housing (8), and thus the rotation of the transmission shaft (2) makes the cogwheel (21) rotate and the cogwheel (21) makes the gear pairs rotate by means of the drive gear (3), which is in contact with the cogwheel (21).

Around the chambers that house the gears (14, 15), in the area where the drive gear (3) is in contact with the idler gear (4), there is a first chamber (46) and a second chamber (47), which are joined to the first cylinder (34), to the one second cylinder (12) via a first disc (26), in such a way that the rotation of the gears (3, 4) drives the brake fluid situated in the first chamber (46) or in the second chamber (47) depending on the rotational direction of the gears (3, 4).

The rotational direction of the fluid having been established as being from the first chamber (46) towards the second chamber (47), the brake fluid enters into the chambers that house the gears (14, 15), where it is driven by the gears (3, 4), it passes through the second chamber (47) towards the second cylinder (12) until it reaches the recirculation chamber (13) in order to return through the first cylinder (34) until the first chamber (46). Then, the brake fluid pass through the chambers where the gears (14, 15) are housed and it is again driven by means of the gears (3, 4) to the second chamber (47), from where it goes out towards the recirculation chamber through the second cylinder (12).

In this way, closed circulation circuits of brake fluid are created inside the chamber (11). The direction of the fluid circulation, and therefore the fact that the first cylinder (34) is an intake cylinder or first drive cylinder (34), depends on the rotational direction of the transmission shaft (2) to which the device (1) is linked. So, if the rotational direction of said transmission shaft (2) changes, then the fluid circulation direction of the closed circulation circuit also changes, and the first intake cylinder (34) becomes a first drive cylinder (12). Therefore, both the first cylinder (34) and the second cylinder (12) may be commonly known as recirculation cylinders (34, 12).

Between the end of the recirculation cylinders (34, 12) of the device (1), object of the invention, and the body of the volumetric pump (6), there is a first disc (26) on the outer side of the device (1) that fixes the position of the recirculation cylinders (34, 12) and of the gears (3, 4) contained in the body of the pump (6); and, on the inner side of the device (1), between the recirculation cylinders (34, 12) of the device (1), object of the invention, and the inner housing (9), there is a second disc (27) that fixes the position of the brake fluid recirculation cylinders (34, 12) in order to fit them into the recirculation chamber (13). This second clamping disc (27), along with the inner housing (9), makes up the brake fluid recirculation chamber (13).

Both the first disc (26) and the second disc (27) comprise a plurality of through holes (28), which coincide with the location of the recirculation cylinders (34, 12), said recirculation cylinders (34, 12) fitting with the first chambers (46) and the second chambers (47) through the outer portion of the device (1), and with the recirculation chamber (13) through the inner portion of the device (1).

From the configuration described in the previous paragraph, it is understood that the brake fluid recirculation chamber (13) is limited, on one side, by the inner housing (9) and, on the opposite side, by the second disc (27), which connects with the recirculation cylinders (34, 12).

The inner housing (9) has a stepped shape comprising three different steps that make up a first inner collar (32a), a second inner collar (32b) and a step (23), the diameter of the first inner collar (32a) being smaller than the diameter of the second inner collar (32b). The first inner collar (32a) serves to fix the device (1), object of the invention, to a fixed outer element that supports the device (1), and inside which elements of the braking device (1), which are explained below in this specification, are included. A valve, which interrupts the brake fluid circulation, is housed inside the second inner collar (32b). This valve, in this exemplary embodiment, is a piston (16) that moves through the inside of a guide cylinder (18). The step (23) of the inner housing (9) provides the shape of the brake fluid recirculation chamber (13).

The piston (16) moves parallel to the transmission shaft (2) until it reaches the second disc (27), thus interrupting the passage of brake fluid through the recirculation chamber (13), i.e. interrupting the brake fluid circulation in the closed circulation circuits of brake liquid created by the brake fluid recirculation cylinders (34, 12), the recirculation chamber (13) and the body of the volumetric pump (6).

The piston (16) moves through the guide cylinder (18) situated in the second inner collar (32') of the inner housing (9). The backwards movement of the piston (16) to the initial position thereof inside the guide cylinder (18) is produced via a spring (24). Said spring (24) rests on one side on a stop ridge (40), which is provided by the piston (16) and on the second disc (27) on the other side. Likewise, when the piston (16) moves backwards due to the spring (24), it rests on a support ridge (31) created by the difference in diameter between the actuating fluid receiving chamber (19) of the piston (16) and the guide cylinder (18) that houses the piston (16) (this configuration may be seen in figure 2).

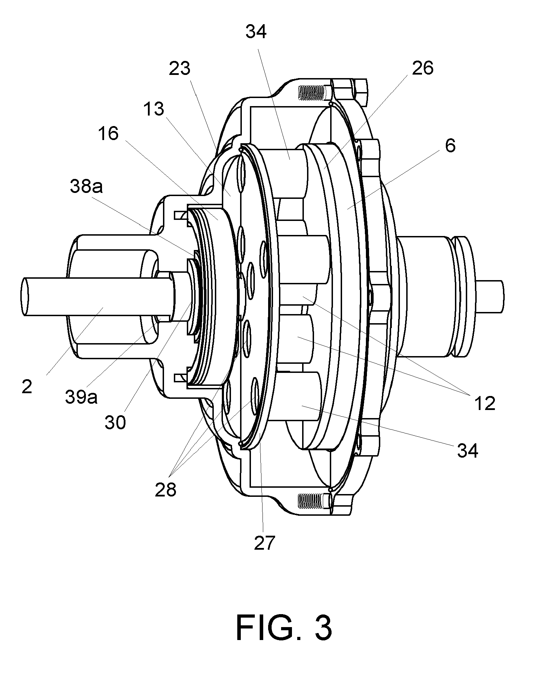

In figure 3 it may be seen that in this exemplary embodiment, the transmission shaft (2), which rests on the axial bearing (25), pass through the inside of the piston (16). In order to support the transmission shaft (2), the inner housing (9) comprises:
- a first inner recess (38a), which houses an axial bearing (25) on which the transmission shaft (2) rests, and
- a second inner recess (39a), which houses a friction bearing (30), the friction bearing (30) and the axial bearing (25) being separated.

The movement of the piston (16) is produced by inserting a piston actuating fluid into a fluid receiving chamber (19), which moves the piston (16) through the inside of the guide cylinder (18). The fluid receiving chamber (19) comprises two threaded drill holes (20) in which the injection and purge valves of the piston actuating fluid are installed.

Inside the guide chamber (18) there is a casing (33) situated on the perimeter of the guide cylinder (18), which facilitates the movement of the piston (16) through the guide cylinder (18) and aids in the fluid-tightness between the recirculation chamber (13) and the fluid receiving chamber (19).

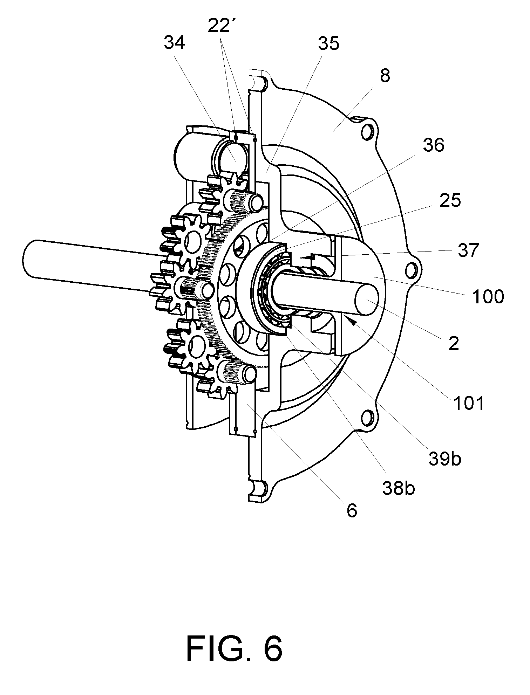

The outer housing (8) of the device (1) also has a stepped shape comprising a first step (35), inside which the cogwheel (21) and the spline shafts (7) of the drive gears (3) are housed, and a second step (36) situated inside an outer collar (37) facing the disc (100), through which the transmission shaft (2) exits where the aforementioned disc (100) is placed (this configuration of the braking device may be seen in figure 6).

Likewise, the outer housing (8), to support the transmission shaft (2), has a similar configuration to the inner housing (9), comprising in the area close to the transmission shaft (2):
- a first inner recess (38b) to house an axial bearing (25) that is in contact with the cogwheel (21), in such a way that the transmission shaft (2) rests on this axial bearing (25), and
- a second inner recess (39b), which houses a friction bearing (30), the friction bearing (30) and the axial bearing (25) being separated.

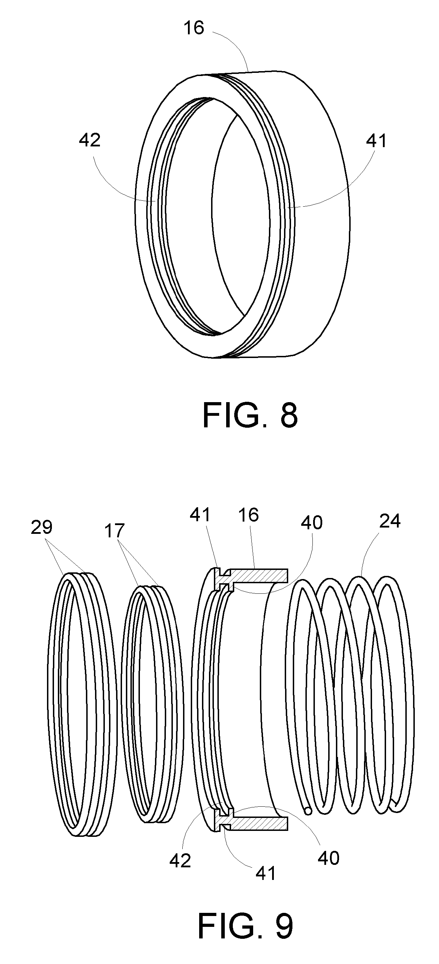

So-called "outer" and "inner" rings are mentioned below to which the criteria defined in the third paragraph of this section do not apply. The piston (16) (which may be seen in figure 8) comprises outer grooves (41), with respect to the piston (16), to house a number of outer high compression rings (29) and a number of inner grooves (42), with respect to the piston (16), to house inner high compression rings (17). The configuration of the piston (16), the outer high compression rings (29) that are installed in the outer grooves (41) and the inner high compression rings (17) that are installed in the inner grooves (42) may be seen in the exploded view of figure 9 wherein a cross-section of the piston (16) is shown.

The outer high compression rings (29), along with the inner high compression rings (17) and the piston (16), guarantee that the contact of the recirculation chamber (13) with the fluid receiving chamber (19) is fluid-tight.

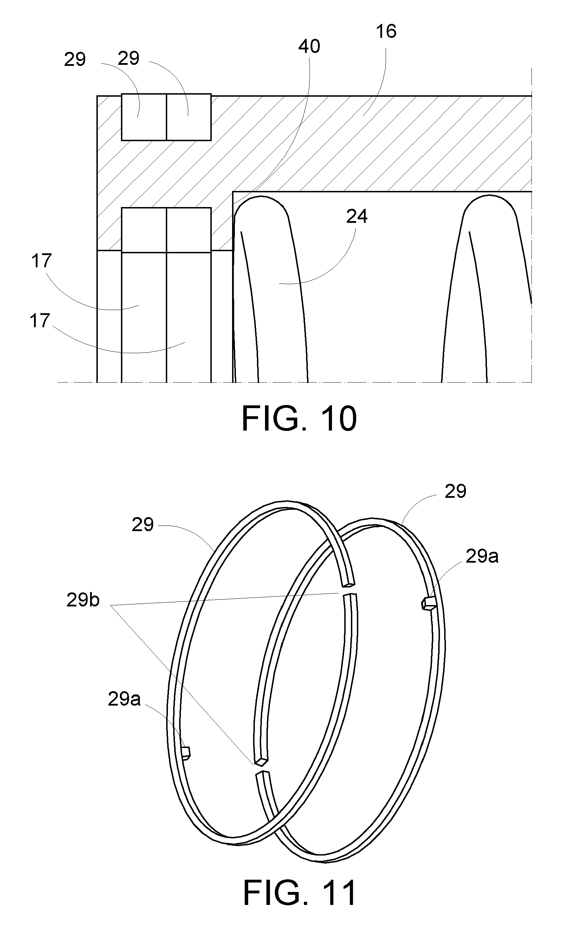

Figure 11 shows the outer high compression rings (29). As may be seen, the outer high compression rings (29) have a circular cross-section with an opening (29b) made in order for them to be placed in the inner grooves (42). Two units of the outer high compression rings (29), which ensure that the piston actuating fluid does not pass between the piston (16) and the guide cylinder (18), are placed in this embodiment. As there are two rings that ensure that the piston actuating fluid does not pass between the piston (16) and the guide cylinder (18), it may be the case that the two outer high compression rings (29) rotate and coincide with the two openings (29b). This position would enable the piston actuating fluid (16) to pass through, thus reducing the efficiency of the device (1), this being the reason why an alternative solution is sought. In order to ensure that the two openings in said alternative solution do not coincide in the rotation, the outer high compression rings (29) include a number of tabs (29a) that are inserted into the openings (29b) in such a way that the two outer high compression rings (29) rotate together. The inner high compression rings (17), two units of which are also installed in this exemplary embodiment, have this same structure.

Braking is produced in the following manner: the brake fluid of the device (1), object of the invention, circulates from the drive cylinders to the intake cylinders through the recirculation chamber (13) due to the action of the volumetric pump (as explained above in this specification). In the recirculation chamber (13) the brake fluid passes through the space between the second disc (27) and the piston (16). Thus, the space between the second disc (27) and the aforementioned piston (16) decreases according to the forward movement of the piston (16), thus meaning that it is harder for the brake fluid to pass through, reducing the rotation speed of the gear pairs (3, 4). Then, the cogwheel (21) reduces the rotation speed thereof, and the rotation speed of the transmission shaft (2) decreases along with the cogwheel (21). Complete braking of the transmission shaft (2) movement is produced when the piston (16) reaches the second disc (27), thus completely preventing the passage of brake fluid.

It may be seen in figure 2 that in the mounting of different components of the braking device (1), object of the invention, an O-ring seal is used between the housings (22), which ensures that the perimeter chamber (43) for cooling fluid circulation is fluid-tight.

Cooling the braking device (1), object of the invention, is carried out in several possible ways:
- The first way of cooling: cooling is produced via a cooling fluid. In this first embodiment, a perimeter chamber (43) through which cooling fluid circulates is placed between the brake fluid recirculation cylinders (12, 34) and the housings (8, 9).
- The second means of cooling (as may be seen in figure 11): cooling is carried out by air. In this second embodiment, the housings (8, 9) comprise a number of fins (44) through which heat from the recirculation chamber (13) is dissipated. This embodiment includes a number of vanes (45) situated coaxially with respect to the transmission shaft (2) and are moved by the same transmission shaft (2). Said vanes (45) generate an airflow that, as a result of a convection heat exchange process, cools the fins (44) and thus dissipates the aforementioned heat. Said vanes (45) are fixed on the disc (100) in such a way that the rotation of the transmission shaft (2), which is actuated either by the rotation force originating from an external element such as a wheel fixed to the disc (100), or by the driving assembly attached to the end of the aforementioned transmission shaft (2) due to the machining thereof, moves the vanes (45) generating a forced convection that helps to dissipate the heat absorbed by the fins (44).
- It is possible to carry out a combination of the two aforementioned embodiments in which cooling via a cooling fluid contained in a perimeter chamber (43) is complemented by cooling carried out by air, in such a way that there are a number of fins (44) around the perimeter chamber and there are a number of vanes (45) fixed to the disc (100).

The invention should not be limited to the particular embodiment described in this document. A person skilled in the art may develop other embodiments in light of the description made herein. As such, the scope of the invention is defined by the following claims.

## Claims

1. A braking device (1) comprising:
- a brake fluid,
- a transmission shaft (2),
- a driving element actuated by the transmission shaft (2) made up by a volumetric pump (6),
- a chamber (11) coaxial to the transmission shaft (2), in turn comprising:
- at least one first cylinder (34) that forms at least one intake cylinder, and
- at least one second cylinder (12), which forms at least one drive cylinder,
- at least one recirculation chamber (13) that connects the at least one first cylinder (34) and at least one second cylinder (12), and
- at least one valve,
in such a way that the brake fluid, driven by the driving element, circulates through the at least one first cylinder (34), and at least one second cylinder (12) and the at least one recirculation chamber (13), such that the progressive actuation of the valve partially or fully prevents the circulation of the brake fluid through the at least one recirculation chamber (13), thus making the rotation of the driving element harder and, therefore, the rotation of the transmission shaft (2), thus obtaining the braking of the transmission shaft (2),
**characterised in that** the breaking device further comprises:
- an outer housing (8) and an inner housing (9), which are fixed coaxially to the transmission shaft (2) via screws (10), the joining of the housings (8, 9) thus forming the chamber (11), and
- a first disc (26) situated between the at least one first cylinder (34) and the at least one second cylinder (12) and the volumetric pump (6), which fixes the position of the aforementioned cylinders (34, 12),
- a second disc (27) situated between the cylinders (34, 12) and the inner housing (9), which fixes the position of the cylinders (34, 12) and fits the cylinders (34, 12) into the recirculation chamber (13),
such that between the housings (8, 9) and the first disc (26) and the second disc (27), a perimeter (43) chamber is created through which a cooling fluid circulates in order to exchange the heat generated by the brake fluid that moves through the at least one first cylinder (34) and at least one second cylinder (12) and the recirculation chamber (13).

2. The braking device (1), according to claim 1, **characterised in that** the stop valve is a piston (16).

3. The braking device (1), according to claim 1, **characterised in that** the stop valve is a tap.

4. The braking device (1), according to claims 1 and 2 **characterised in that** it comprises at least one drive gear (3) and at least one idler gear (4) situated in a drive gear chamber (14) and an idler gear chamber (15), these chambers (14, 15) being situated in the volumetric pump (6).

5. The braking device (1), according to claim 4, **characterised in that** the volumetric pump comprises at least one first chamber (46) situated in correspondence with the at least one first cylinder (34) and at least one second chamber (47) situated in correspondence with the at least one second cylinder (12).

6. The braking device (1), according to claims 4 and 5, **characterised in that** the drive gear chamber (14), the idler gear chamber (15), the first chamber (46) and the second chamber (47) are all connected to each other.

7. The braking device (1), according to previous claims 1, 2, and 4 to 6, **characterised in that** the second disc (27), along with the inner housing (9), makes up the brake fluid recirculation chamber (13).

8. The braking device (1), according to claims 1, 2, 3 and 4 to 7, **characterised in that** the first disc (26) and the second disc (27) comprise a plurality of through holes (28), which are situated in correspondence with the at least one first cylinder (34) and with the at least one second cylinder (12).

9. The braking device (1), according to the previous claims , **characterised in that** the recirculation chamber (13) is closed in a fluid-tight manner via:
- a first friction bearing (30) placed in the inner housing (9),
- a second friction bearing (30) installed in the second disc (27),
- a number of O-ring seals (22') placed between the first disc (26) and the inner housing (9) and between the second disc (27) and the outer housing (8), and
- a number of compression rings (29, 17) installed in the piston (16).

10. The braking device (1), according to claims 1, 2 and 4 to 9, **characterised in that**:
- the piston (16), which is housed in a guide cylinder (18), moves towards the second disc (27) via the pressure increase of the piston actuating fluid contained in a fluid receiving chamber (19) for actuating the piston situated in the inner housing (9), which is connected to the guide cylinder (18); and
- the piston (16) moves backwards towards the inside of the guide cylinder (18) due to the action of a spring (24), which rests on the second disc (27), where the at least one first intake cylinder (34) and the at least one second drive cylinder (12) are placed on one side and on a stop ridge (40) situated inside the piston (16), in such a way that when the piston actuating fluid contained in the fluid receiving chamber (19) for actuating the piston stops putting pressure on the piston (16), the aforementioned piston (16) moves backwards through the inside of the guide cylinder (18) until the piston (16) abuts with a support ridge (31).

11. The braking device (1), according to the previous claims , **characterised in that** the housings (8, 9) comprise a first inner recess (38a, 38b) in which an axial bearing (25) is installed such that the transmission shaft (2) rests on the axial bearing (25) in order to pass through the housings (8, 9).

12. The braking device (1), according to claim 11, **characterised in that** the housings (8, 9) comprise a second inner recess (39a, 39b) in which a friction bearing (30) is installed, which makes the device (1) fluid-tight.

13. The braking device (1), according to previous claims , **characterised in that** the first disc (26) and the second disc (27) comprise a number of friction bearings (30) coaxial with the transmission shaft (2), which guarantee that the perimeter chamber (43) is fluid-tight.

14. The braking device (1), according to previous claims , **characterised in that** the housings (8, 9) comprise a number of fins (44) on the outer portion thereof to dissipate heat generated by the brake fluid that moves through the recirculation chamber (13).

15. The braking device (1), according to any of the of the previous claims, **characterised in that** it comprises a number of vanes (45) situated around the transmission shaft (2) that generate a forced convection, which helps to dissipate the heat absorbed by the fins (44) generated by the brake fluid that moves through the recirculation chamber (13).

## Patentansprüche

1. Bremsvorrichtung (1), die umfasst:
- eine Bremsflüssigkeit,
- eine Übertragungswelle (2),
- ein Antriebselement, das durch die Übertragungswelle (2) betätigt wird und aus einer volumetrischen Pumpe (6) besteht,
- eine Kammer (11), die koaxial zu der Übertragungswelle (2) ist und ihrerseits umfasst:
- wenigstens einen ersten Zylinder (34), der wenigstens einen Einlasszylinder bildet, und
- wenigstens einen zweiten Zylinder (12), der wenigstens einen Antriebszylinder bildet,
- wenigstens eine Rückführkammer (13), die den wenigstens einen ersten Zylinder (34) und den wenigstens einen zweiten Zylinder (12) verbindet, sowie
- wenigstens ein Ventil,
so dass die Bremsflüssigkeit, die von dem Antriebselement angetrieben wird, durch den wenigstens einen ersten Zylinder (34) und den wenigstens einen zweiten Zylinder (12) sowie die wenigstens eine Rückführkammer (13) zirkuliert und so die fortlaufende Betätigung des Ventils die Zirkulation der Bremsflüssigkeit durch die wenigstens eine Rückführkammer (13) teilweise oder vollständig verhindert, so dass die Drehung des Antriebselementes und damit die Drehung der Übertragungswelle (2) erschwert wird und so das Bremsen der Übertragungswelle (2) erreicht wird,
**dadurch gekennzeichnet, dass** die Bremsvorrichtung des Weiteren umfasst:
- ein äußeres Gehäuse (8) und ein inneres Gehäuse (9), die über Schrauben (10) koaxial an der Übertragungswelle (2) befestigt sind, wobei durch die Verbindung der Gehäuse (8, 9) so die Kammer (11) gebildet wird, sowie
- eine erste Scheibe (26), die sich zwischen dem wenigstens einen ersten Zylinder (34) und dem wenigstens einen zweiten Zylinder (12) sowie der volumetrischen Pumpe (6) befindet und die Position der Zylinder (34, 12) fixiert,
- eine zweite Scheibe (27), die sich zwischen den Zylindern (34, 12) und dem inneren Gehäuse (9) befindet, die Position der Zylinder (34, 12) fixiert und die Zylinder (34, 12) in die Rückführkammer (13) einpasst,
so dass zwischen den Gehäusen (8, 9) und der ersten Scheibe (26) sowie der zweiten Scheibe (27) eine Umfangs-Kammer (43) geschaffen wird, durch die eine Kühlflüssigkeit zirkuliert, um die Wärme auszutauschen, die durch die Bremsflüssigkeit erzeugt wird, die sich durch den wenigstens einen ersten Zylinder (34) und den wenigstens einen zweiten Zylinder (12) sowie die Rückführkammer (13) bewegt.

2. Bremsvorrichtung (1) nach Anspruch 1, **dadurch gekennzeichnet, dass** die Absperrarmatur (16) ein Kolben ist.

3. Bremsvorrichtung (1) nach Anspruch 1, **dadurch gekennzeichnet, dass** die Absperrarmatur eine Anzapfung ist.

4. Bremsvorrichtung (1) nach den Ansprüchen 1 und 2, **dadurch gekennzeichnet, dass** sie wenigstens ein Antriebsrad (3) sowie wenigstens ein Laufrad (4) umfasst, die sich in einer Antriebsrad-Kammer (14) und einer Laufrad-Kammer (15) befinden, wobei sich diese Kammern (14, 15) in der volumetrischen Pumpe (6) befinden.

5. Bremsvorrichtung (1) nach Anspruch 4, **dadurch gekennzeichnet, dass** die volumetrische Pumpe wenigstens eine erste Kammer (46), die sich an dem wenigstens einen ersten Zylinder (34) befindet, sowie wenigstens eine zweite Kammer (47) umfasst, die sich an dem wenigstens einen zweiten Zylinder (12) befindet.

6. Bremsvorrichtung (1) nach den Ansprüchen 4 und 5, **dadurch gekennzeichnet, dass** die Antriebsrad-Kammer (14), die Laufrad-Kammer (15), die erste Kammer (46) und die zweite Kammer (47) sämtlich miteinander verbunden sind.

7. Bremsvorrichtung (1) nach den vorangehenden Ansprüchen 1, 2 sowie 4 bis 6, **dadurch gekennzeichnet, dass** die zweite Scheibe (27) zusammen mit dem inneren Gehäuse (9) die Bremsflüssigkeits-Rückführkammer (13) bildet.

8. Bremsvorrichtung (1) nach den Ansprüchen 1, 2, 3 sowie 4 bis 7, **dadurch gekennzeichnet, dass** die erste Scheibe (26) und die zweite Scheibe (27) eine Vielzahl von Durchgangslöchern (28) umfassen, die sich an dem wenigstens einen ersten Zylinder (34) und dem wenigstens einen zweiten Zylinder (12) befinden.

9. Bremsvorrichtung (1) nach den vorangehenden Ansprüchen, **dadurch gekennzeichnet, dass** die Rückführkammer (13) über:
- ein erstes Gleitlager (30), dass in dem inneren Gehäuse (9) positioniert ist,
- ein zweites Gleitlager (30), das in der zweiten Scheibe (27) installiert ist,
- eine Anzahl von O-Ringdichtungen (22'), die zwischen der ersten Scheibe (26) und dem inneren Gehäuse (9) sowie zwischen der zweiten Scheibe (27) und dem äußeren Gehäuse (8) positioniert sind, sowie
- eine Anzahl von Druckringen (29, 17), die in dem Kolben (16) installiert sind, flüssigkeitsundurchlässig abgeschlossen ist.

10. Bremsvorrichtung (1) nach den Ansprüchen 1, 2 sowie 4 bis 9, **dadurch gekennzeichnet, dass**:
- der Kolben (16), der in einem Führungszylinder (18) aufgenommen ist, sich durch den zunehmenden Druck der Kolben-Betätigungsflüssigkeit, die in einer Flüssigkeits-Aufnahmekammer (19), die mit dem Führungszylinder (18) verbunden ist, aufgenommen ist, um den in dem inneren Gehäuse (9) befindlichen Kolben zu betätigen, auf die zweite Scheibe (27) zubewegt; und
- der Kolben (16) aufgrund der Wirkung einer Feder (24), die an der zweiten Scheibe (27) anliegt, sich rückwärts auf den Innenraum des Führungszylinders (18) zubewegt, wobei der wenigstens eine erste Einlasszylinder (34) und der wenigstens eine zweite Antriebszylinder (12) an einer Seite und an einem Anschlagsteg (40) der sich im Inneren des Kolbens (16) befindet, so positioniert sind, dass, wenn die in der Flüssigkeits-Aufnahmekammer (16) aufgenommene Kolben-Betätigungsflüssigkeit zum Betätigen des Kolbens aufhört, Druck auf den Kolben (16) auszuüben, der Kolben (16) sich rückwärts durch den Innenraum des Führungszylinders (18) bewegt, bis der Kolben (16) an einem Auflage-Steg (31) anschlägt.

11. Bremsvorrichtung (1) nach den vorangehenden Ansprüchen, **dadurch gekennzeichnet, dass** die Gehäuse (8, 9) eine erste innere Vertiefung (38a, 38b) umfassen, in der ein Axiallager (25) so installiert ist, dass die Übertragungswelle (2), um durch die Gehäuse (8, 9) hindurch zu treten, auf dem Axiallager (25) aufliegt.

12. Bremsvorrichtung (1) nach Anspruch 11, **dadurch gekennzeichnet, dass** die Gehäuse (8, 9) eine zweite innere Vertiefung (39a, 39b) umfassen, in der ein Gleitlager (30) installiert ist, durch das die Vorrichtung (1) flüssigkeitsundurchlässig ist.

13. Bremsvorrichtung (1) nach den vorangehenden Ansprüchen, **dadurch gekennzeichnet, dass** die erste Scheibe (26) und die zweite Scheibe (27) eine Anzahl von Gleitlagern (30) koaxial zu der Übertragungswelle (2) umfassen, die gewährleisten, dass die Umfangs-Kammer (43) flüssigkeitsundurchlässig ist.

14. Bremsvorrichtung (1) nach den vorangehenden Ansprüchen, **dadurch gekennzeichnet, dass** die Gehäuse (8, 9) eine Anzahl von Rippen (44) an ihrem Außenabschnitt umfassen, um Wärme abzuleiten, die durch die Bremsflüssigkeit erzeugt wird, die sich durch die Rückführkammer (13) bewegt.

15. Bremsvorrichtung (1) nach einem der vorangehenden Ansprüche, **dadurch gekennzeichnet, dass** sie eine Anzahl von Flügeln (45) umfasst, die um die Übertragungswelle (2) herum angeordnet sind und eine erzwungene Konvektion bewirken, die dazu beiträgt, die durch die Rippen (44) absorbierte Wärme abzuleiten, die durch die Bremsflüssigkeit erzeugt wird, die sich durch die Rückführkammer (13) bewegt.

## Revendications

1. Dispositif de freinage (1) comprenant :
- un fluide de frein,
- un arbre de transmission (2),
- un élément d'entraînement actionné par l'arbre de transmission (2) composé par une pompe volumétrique (6),
- une chambre (11) coaxiale par rapport à l'arbre de transmission (2), comprenant à son tour :
- au moins un premier cylindre (34) qui forme au moins un cylindre d'admission, et
- au moins un second cylindre (12), qui forme au moins un cylindre d'entraînement,
- au moins une chambre de recirculation (13) qui raccorde le au moins un premier cylindre (34) et au moins un second cylindre (12), et
- au moins une soupape,
de sorte que le fluide de frein, entraîné par l'élément de freinage, circule à travers le au moins un premier cylindre (34) et au moins un second cylindre (12) et la au moins une chambre de circulation (13), de sorte que l'actionnement progressif de la soupape empêche partiellement ou totalement la circulation du fluide de frein à travers la au moins une chambre de recirculation (13), rendant ainsi la rotation de l'élément d'entraînement plus dure, et par conséquent la rotation de l'arbre de transmission (2), obtenant ainsi le freinage de l'arbre de transmission (2),
**caractérisé en ce que** le dispositif de freinage comprend en outré :
- un boîtier externe (8) et un boîtier interne (9) qui sont fixés de manière coaxiale à l'arbre de transmission (2) via des vis (10), l'assemblage des boîtiers (8, 9) formant ainsi la chambre (11), et
- un premier disque (26) situé entre le au moins un premier cylindre (34) et le au moins un second cylindre (12) et la pompe volumétrique (6) qui détermine la position des cylindres (34, 12) mentionnés ci-dessus,
- un second disque (27) situé entre les cylindres (34, 12) et le boîtier interne (9) qui détermine la position des cylindres (34, 12) et monte les cylindres (34, 12) dans la chambre de recirculation (13),
de sorte qu'entre les boîtiers (8, 9) et le premier disque (26) et le second disque (27), on crée une chambre périmétrale (43) à travers laquelle un fluide de refroidissement circule afin d'échanger la chaleur générée par le fluide de frein qui se déplace à travers le au moins un cylindre (34) et au moins un second cylindre (12) et la chambre de recirculation (13).

2. Dispositif de freinage (1) selon la revendication 1, **caractérisé en ce que** la soupape d'arrêt est un piston (16).

3. Dispositif de freinage (1) selon la revendication 1, **caractérisé en ce que** la soupape d'arrêt est un robinet.

4. Dispositif de freinage (1) selon les revendications 1 et 2, **caractérisé en ce qu'**il comprend au moins un engrenage d'entraînement (3) et au moins un engrenage intermédiaire (4) situé dans une chambre d'engrenage d'entraînement (14) et une chambre d'engrenage intermédiaire (15), ces chambres (14, 15) étant situées dans la pompe volumétrique (6).

5. Dispositif de freinage (1) selon la revendication 4, **caractérisé en ce que** la pompe volumétrique comprend au moins une première chambre (46) située en correspondance avec le au moins un premier cylindre (34) et au moins une seconde chambre (47) située en correspondance avec le au moins un second cylindre (12).

6. Dispositif de freinage (1) selon les revendications 4 et 5, **caractérisé en ce que** la chambre d'engrenage d'entraînement (14), la chambre d'engrenage intermédiaire (15), la première chambre (46) et la seconde chambre (47) sont toutes raccordées entre elles.

7. Dispositif de freinage (1) selon les revendications 1, 2 et 4 à 6, **caractérisé en ce que** le second disque (27), conjointement avec le boîtier interne (9), compose la chambre de recirculation de fluide de frein (13).

8. Dispositif de freinage (1) selon les revendications 1, 2, 3 et 4 à 7, **caractérisé en ce que** le premier disque (26) et le second disque (27) comprennent une pluralité de trous débouchants (28) qui sont situés en correspondance avec le au moins un premier cylindre (34) et avec le au moins un second cylindre (12).

9. Dispositif de freinage (1) selon les revendications précédentes, **caractérisé en ce que** la chambre de recirculation (13) est fermée de manière étanche au fluide, via :
- un premier palier de friction (30) placé dans le boîtier interne (9),
- un second palier de friction (30) installé dans le second disque (27),
- un certain nombre de joints toriques (22') placés entre le premier disque (26) et le boîtier interne (9) et entre le second disque (27) et le boîtier externe (8), et
- un certain nombre de bagues de compression (29, 17) installées dans le piston (16).

10. Dispositif de freinage (1) selon les revendications 1, 2 et 4 à 9, **caractérisé en ce que** :
- le piston (16), qui est logé dans un cylindre de guidage (18), se déplace vers le second disque (27) via l'augmentation de pression du fluide d'actionnement de piston contenu dans une chambre de réception de fluide (19) pour actionner le piston situé dans le boîtier interne (9) qui est raccordé au cylindre de guidage (18) ; et
- le piston (16) se déplace vers l'arrière vers l'intérieur du cylindre de guidage (18) en raison de l'action d'un ressort (24), qui s'appuie sur le second disque (27), où le au moins un premier cylindre d'admission (34) et le au moins un second cylindre d'entraînement (12) sont placés d'un côté et sur une crête de butée (40) située à l'intérieur du piston (16), de sorte que lorsque le fluide d'actionnement de piston contenu dans la chambre de réception de fluide (19) pour actionner le piston arrête de mettre de la pression sur le piston (16), le piston (16) mentionné ci-dessus se déplace vers l'arrière par l'intérieur du cylindre de guidage (18) jusqu'à ce que le piston (16) vienne en butée avec une crête de support (31).

11. Dispositif de freinage (1) selon les revendications précédentes, **caractérisé en ce que** les boîtiers (8, 9) comprennent un premier évidement interne (38a, 38b) dans lequel un palier axial (25) est installé de sorte que l'arbre de transmission (2) s'appuie sur le palier axial (25) afin de passer à travers les boîtiers (8, 9).

12. Dispositif de freinage (1) selon la revendication 11, **caractérisé en ce que** les boîtiers (8, 9) comprennent un second évidement interne (39a, 39b) dans lequel est installé un palier de friction (30) qui rend le dispositif (1) étanche au fluide.

13. Dispositif de freinage (1) selon les revendications précédentes, **caractérisé en ce que** le premier disque (26) et le second disque (27) comprennent un certain nombre de paliers de friction (30) coaxiaux par rapport à l'arbre de transmission (2), qui garantissent que la chambre périmétrale (43) est étanche au fluide.

14. Dispositif de freinage (1) selon les revendications précédentes, **caractérisé en ce que** les boîtiers (8, 9) comprennent un certain nombre d'ailettes (44) sur sa partie externe pour dissiper la chaleur générée par le fluide de frein qui se déplace à travers la chambre de recirculation (13).

15. Dispositif de freinage (1) selon l'une quelconque des revendications précédentes, **caractérisé en ce qu'**il comprend un certain nombre de pales (45) situées autour de l'arbre de transmission (2) qui génèrent une convection forcée qui aide à dissiper la chaleur absorbée par les ailettes (44) générée par le fluide de frein qui se déplace à travers la chambre de recirculation (13).
